# EUROPÄISCHE PATENTSCHRIFT

(11) **EP 1 165 309 B1**
(45) Veröffentlichungstag und Bekanntmachung des Hinweises auf die Patenterteilung: **12.11.2003**
(21) Anmeldenummer: 00922550.9
(22) Anmeldetag: 27.03.2000
(51) Int. Cl.: B31B 1/90

(54) **VERFAHREN ZUR HERSTELLUNG EINER VERBUNDPACKUNG UND DANACH HERGESTELLTE VERBUNDPACKUNG**
METHOD FOR PRODUCING A COMPOSITE PACKING AND A COMPOSITE PACKING PRODUCED ACCORDING TO SAID METHOD
PROCEDE PERMETTANT DE FABRIQUER UN EMBALLAGE COMPOSITE ET EMBALLAGE COMPOSITE AINSI FABRIQUE

(30) Priorität: 26.03.1999 DE 19915150
(43) Veröffentlichungstag der Anmeldung: 02.01.2002
(73) Patentinhaber: SIG Combibloc GmbH, 52441 Linnich (DE)
(72) Erfinder: BÖMER, Hans, D-40699 Erkrath (DE); DAMMERS, Matthias, D-52477 Alsdorf (DE)
(74) Vertreter: Thielmann, Andreas
(86) Internationale Anmeldenummer: EP0002662
(87) Internationale Veröffentlichungsnummer: WO00058079

(56) Entgegenhaltungen:
- EP-A- 0 965 438
- GB-A- 1 545 738
- GB-A- 2 054 515

## Beschreibung

Die Erfindung betrifft ein Verfahren zur Herstellung einer Verbundpackung mit einer durch eine Aufreißlasche verschlossenen Öffnung, wobei die Öffnung in einem Packungsmaterial ausgestanzt wird, wobei zumindest im Bereich der Öffnung das Packungsmaterial beschichtet wird, wobei aus dem beschichteten Packungsmaterial ein Packungsmantel erzeugt wird und wobei auf der Öffnung des Packungsmantels eine Aufreißlasche angebracht wird.

Flüssige Produkte und auch hochviskose Produkte mit stückigen Anteilen werden heute zu einem großen Teil in Verbundpackungen angeboten. Dabei besteht seitens der Verbraucher häufig der Wunsch nach Verbundpackungen, die insbesondere eine einfache, manuell funktionierende Öffnungseinrichtung aufweisen. Es sind verschiedene Arten von Öffnungs- bzw. Ausgießelementen bekannt, wie beispielsweise Schraubverschlüsse, Schnappverschlüsse, Klebestreifenverschlüsse oder Aufreißstreifen. Der mit der Anbringung solcher Öffnungs- bzw. Ausgießelemente verbundene zusätzliche Aufwand verteuert die jeweilige Verbundpackung in der Regel nicht unerheblich.

Aus der GB-A-1 545 738 ist ein Verfahren zur Herstellung einer Verbundpackung mit einer durch eine Aufreißlasche verschlossenen Öffnung bekannt. Dabei werden in die Bahn aus Kartonrohmaterial zunächst Ausgießöffnungen gestanzt.

Im Weiteren werden die Außen- und die Innenseite des Kartonrohmaterials beschichtet. Schließlich werden die Kanten der Ausgießöffnung umgefaltet und es wird die Aufreißlasche angebracht. Das so in einem vorgezogenen Arbeitsschritt vorbereitete Packungsmaterial wird dann zu Packungsmänteln geformt und anschließend gefüllt.

Der Erfindung liegt die Aufgabe zugrunde, eine kostengünstige Verbundpackung mit einer durch eine Aufreißlasche verschlossenen Öffnung sowie ein kostengünstiges Verfahren zur Herstellung einer solchen Verbundpackung anzugeben.

Diese Aufgabe wird bei einem gattungsgemäßen Verfahren dadurch gelöst, daß der Packungsmantel durch Aufschieben auf einen Dorn eines Dornrades, das einer Füllmaschine vorgeschaltet ist, zugeführt wird und dass das Anbringen der Aufreißlasche am Dorn des Dornrades oder mittels eines Ambosses im Bereich einer Zellenkette durchgeführt wird.

Das erfindungsgemäße Verfahren zeichnet sich dadurch aus, daß das Ausstanzen der Öffnung in dem Packungsmaterial und das Anbringen der Aufreißlasche bzw. des Ausgießelementes auf der Öffnung des Packungsmaterials in einem bewährten Herstellungsprozeß unter Verwendung einer Füllmaschine integriert durchgeführt wird. Durch die integrierte bzw. parallele Ausführung können die erforderlichen Verfahrensschritte zur Herstellung einer durch eine Aufreißlasche oder durch ein Ausgießelement verschlossene Öffnung im wesentlichen ohne zusätzlichen Zeitaufwand und somit kostengünstig ausgeführt werden. Ein separater Applikator für die Lochstanzung, das Einsiegeln eines Innenetiketts sowie das Aufsiegeln der Aufreißlasche bzw. des Ausgießelementes ist nicht erforderlich.

Ist die Füllmaschine mit einer Station zur Sterilisation der Verbundpackung ausgestattet, so sollte das Anbringen der Aufreißlasche bzw. des Ausgießelementes vorzugsweise vor der Sterilisationszone durchgeführt werden.

Bei einer Füllmaschine mit einem Dornrad zur Bodensiegelung vorgefertigter Packungsmäntel ist es ferner vorteilhaft, wenn das Anbringen der Aufreißlasche an einem Dorn des Dornrades durchgeführt wird. Der Dorn wird in diesem Fall als Amboß genutzt. Dies ist insbesondere bei einem Anbringen der Aufreißlasche durch Ultraschallschweißung oder Hochfrequenzschweißung von Vorteil. Alternativ kann das Anbringen der Aufreißlasche auch durch Verklebung erfolgen.

Eine günstige Applikationsmöglichkeit für die Aufreißlasche bzw. das Ausgießelement ergibt sich ferner, wenn der Packungsmantel der Füllmaschine derart zugeführt wird, daß dessen Öffnung quer zur Arbeitsrichtung der Füllmaschine nach außen weist.

Nach einer weiteren vorteilhaften Ausgestaltung des erfindungsgemäßen Verfahrens kann vorgesehen sein, daß der jeweilige Packungsmantel zwischen einem Magazin zur Aufnahme vorgefertigter Packungsmäntel an der Füllmaschine und der Stelle, an welcher die Aufreißlasche bzw. das Ausgießelement angebracht wird, um etwa 90° um seine Längsachse gedreht wird.

Weitere vorteilhafte Merkmale des erfindungsgemäßen Verfahrens sind in den Unteransprüchen angegeben.

Die Erfindung wird nachfolgend anhand einer verschiedene Ausführungsbeispiele darstellenden Zeichnung gemäß der ersten Alternative des erfindungsgemäßen Herstellungsverfahren näher erläutert. Im einzelnen zeigen schematisch:
- Fig. 1: eine Darstellung der Verfahrensschritte zur Herstellung vorgefertigter Packungsmäntel;
- Fig. 2: eine Darstellung einer Füllmaschine mit einem Dornrad zum Verschließen und Versiegeln des Bodens vorgefertigter Packungsmäntel gemäß Fig. 1;
- Fig. 3: eine Darstellung erfindungsgemäßer Verfahrensschritte an einer Füllmaschine,
wobei das Anbringen der Aufreißlasche auf einem der Füllmaschine vorgeschalteten Dornradaggregat erfolgt;
- Fig. 4: eine perspektivische Darstellung einer Vorrichtung zum Aufschweißen einer Aufreißlasche am Dorn eines Dornrades;
- Fig. 5: eine Darstellung der Verfahrensschritte innerhalb einer nach dem erfindungsgemäßen Verfahren arbeitenden Füllmaschine gemäß Fig. 2, wobei das Anbringen der Aufreißlasche in einer Kette zwischen dem Dornrad und einer Aseptikstation erfolgt; und
- Fig. 6: die Drehung vorgefertigter Packungsmäntel innerhalb einer Füllmaschine für zwei Produktionsbahnen.

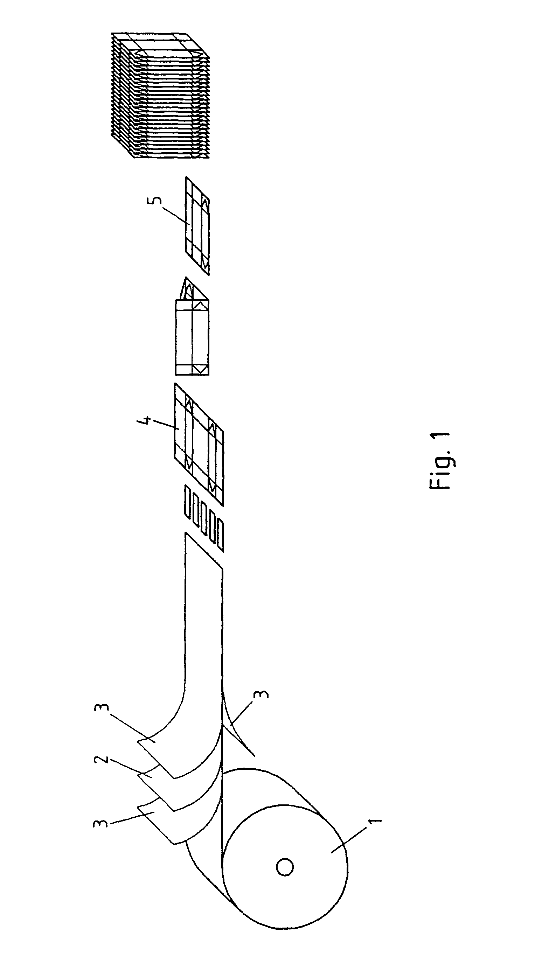

In Fig. 1 sind die Verfahrensschritte zur Herstellung von Packungsmänteln gezeigt. Das aufgerollte Kartonrohmaterial 1 wird in herkömmlicher Weise einseitig mit einer Barriere-Schicht 2, vorzugsweise Aluminiumfolie, und beidseitig mit Polyethylenfolie 3 beschichtet. Vor der Beschichtung werden in dem Kartonrohmaterial 1 bevorzugt als Tropfenloch ausgebildete Öffnungen ausgestanzt. Es ist allerdings auch möglich, daß die Öffnungen erst nach einer außenseitigen Beschichtung des Kartonrohmaterials 1, mit Polyethylenfolie ausgestanzt werden und hierauf eine weitere Beschichtung mit Aluminiumfolie und/oder Polyethylenfolie folgt. Das beschichtete Packungsmaterial wird sodann bedruckt und in einer Stanze in Zuschnitte 4 zerteilt und mit einer Rillung bzw. Kantenprägung für das spätere Falten zu einer quaderförmigen Packung versehen.

Die Packungszuschnitte 4 werden danach jeweils zu einem Packungsmantel 5 gefaltet und entlang der sich überlappenden Längsränder gas- und flüssigkeitsdicht versiegelt. Die längsnahtversiegelten Packungsmäntel 5 werden flachgefaltet hintereinander gereiht und in einer bestimmten Anzahl in Versandkartons oder dergleichen zusammengefaßt.

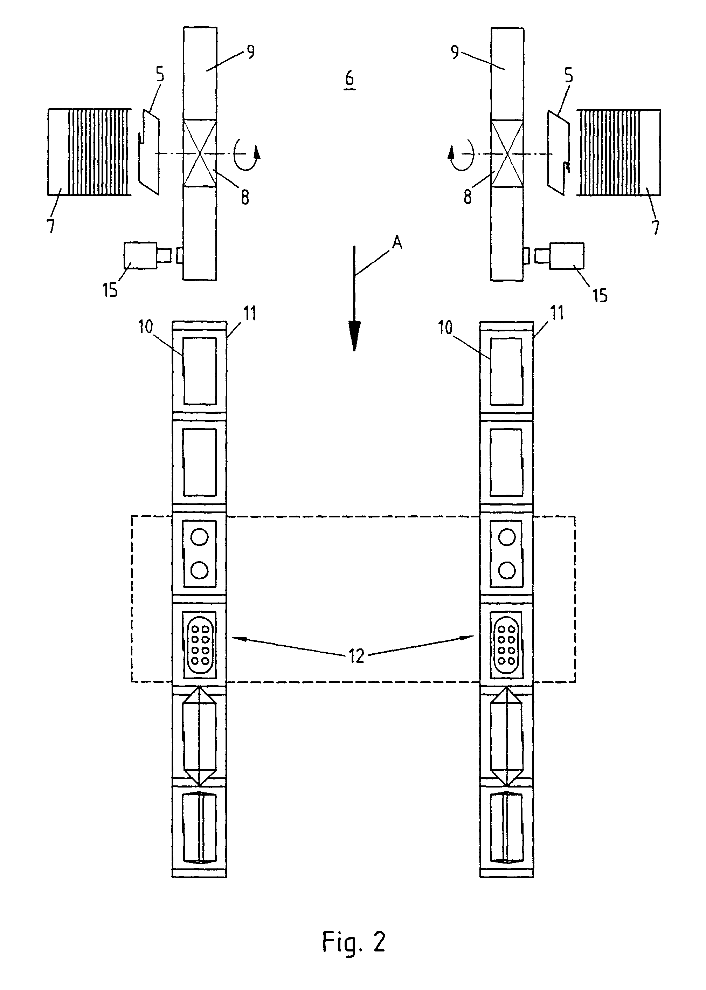

Derart vorgefertigte Packungsmäntel 5 werden dann einer Füllmaschine zugeführt, die zwei, drei oder mehr Produktionsbahnen aufweisen kann. Die in Fig. 2 schematisch gezeigte Füllmaschine 6 weist zwei Produktionsbahnen auf und ist dementsprechend mit zwei Magazinen 7 ausgerüstet. In an sich bekannter Weise werden die Packungsmäntel 5 zur besseren Vereinzelung in den Magazinen 7 in Vibrationen versetzt und seitlich ausgerichtet. Die Mäntel 5 werden dann einzeln durch Saugvorrichtungen aus den Magazinen 7 entnommen, rechteckig aufgeformt und jeweils auf einen Dorn 8 aufgeschoben. Die Füllmaschine ist mit zwei, auf einer gemeinsamen Welle angeordneten Dornrädern 9 ausgestattet, die jeweils sechs gleichwinklig angeordnete Dorne 8 aufweisen.

Am Umfang der Dornräder 9 sind verschiedene Stationen angeordnet, die der Herstellung eines Packungsbodens an dem jeweiligen Packungsmantel 5 dienen. Dabei werden zunächst die zu versiegelnden Bereiche des Packungsbodens mit Heißluft aktiviert. Während das jeweilige Dornrad 9 den Packungsmantel 5 weiter zu einer Bodenpreßstation transportiert, formen rotierende Querfalter und ein Längsfalter den Packungsboden vor. In der Bodenpreßstation wird der Packungsboden dann durch einen Bodenpreßstempel an der Stirnseite des Dorns 8 vollständig verpreßt und versiegelt.

Im Anschluß daran wird die Packung 10 vom Dorn abgestreift und in eine nicht näher bezeichnete Zelle geschoben, die mit einer Vielzahl weiterer Zellen an einer umlaufenden Endloskette 11 ausgebildet ist und den Weitertransport durch verschiedene Stationen entlang der Kette bis zum Abtransport übernimmt. Der Pfeil A zeigt die Arbeitsrichtung der Füllmaschine.

Entlang der Kette 11 der Füllmaschine 6 können vor der Füllstation 12 eine oder mehrere Stationen zur Sterilisation der Packung angeordnet sein. Die Sterilisation kann vorzugsweise u.a. durch Einblasen von dampfförmigem Wasserstoffperoxyd in die oben offenen Packungen 10 erfolgen. Hinter der Füllstation 12 sind Siegelwerkzeuge angeordnet, die den Packungsgiebel falten und bevorzugt mittels Ultraschall oberhalb des Füllspiegels gasdicht versiegeln. Den Siegelwerkzeugen folgen weitere Falt-werkzeuge, die den Packungsgiebel zu einem Flachdach falten. Danach wird das Polyethylen an den Giebeldreiecken (sogenannte "Packungsohren") sowie den Schmalseiten der Packung 10 durch Heißluft erwärmt, die Giebeldreiecke nach unten gefaltet und an den Schmalseiten der Packung 10 angesiegelt. Die fertige Packung wird dann aus der jeweiligen Zelle in einen Absetzer (nicht gezeigt) geschoben und beim nächsten Maschinentakt schließlich an eine Abtransportvorrichtung (nicht gezeigt) übergeben.

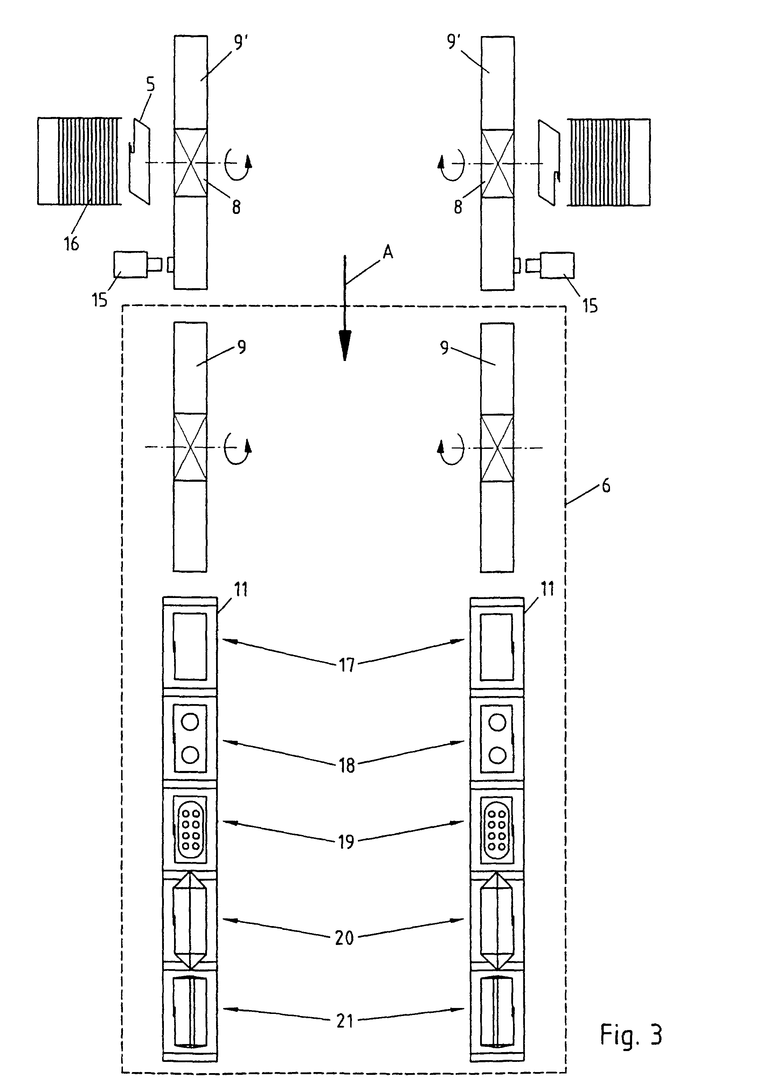

Wie in Fig. 2 gezeigt, kann nach einer ersten Ausführungsform des erfindungsgemäßen Verfahrens die Füllmaschine 6 am Dornrad 9' eine Vorrichtung 15 aufweisen, mit der auf der überbeschichteten Öffnung des Packungsmantels 5 eine Aufreißlasche aufgeschweißt bzw. aufgeklebt werden kann. Eine zweite Ausführungsform des erfindungsgemäßen Verfahrens ist in Fig. 3 schematisch dargestellt. Um gegenüber dem in Fig. 2 dargestellten Verfahren mehr Zeit zum Anbringen der Aufreißlasche zur Verfügung zu haben, ist bei dieser Ausführungsform dem der Bodensiegelung dienenden Dornrad 9 der Füllmaschine 6 ein zusätzliches Dornrad 9' für das Anbringen der Aufreißlasche vorgeschaltet. Die in Stapel 16 zugeführten Packungsmäntel 5 werden dabei wiederum durch Sauger quer zur Arbeitsrichtung A der Füllmaschine 6 angeordneten Magazinen entnommen, rechteckig aufgeformt und auf dem jeweiligen Dorn 8 des vorgeschlagenen Dornrades 9' aufgeschoben. Das Anbringen der Aufreißlasche ist hier somit der Bodensiegelung vorgeschaltet.

Da die Längsnaht einer quaderförmigen Verbundpackung üblicherweise an deren Breitseite angeordnet wird, die Öffnung bzw. das Tropfenloch der Packung üblicherweise neben der Längsnaht im Bereich des Packungsgiebels angeordnet wird und eine gute Zugänglichkeit zur Öffnung bzw. zum Tropfenloch das sichere Anbringen der Aufreißlasche erleichtert, sind die Dorne 8 der Dornräder 9, 9' in den Fig. 2 und 3 jeweils um 90° gegenüber denjenigen bekannter Füllmaschinen 6 gedreht. Die Längsnaht des Packungsmantels liegt somit jeweils an der axialen Außenseite des Dornrades 9 bzw. 9', an welcher auch die Vorrichtung 15 zum Anbringen der Aufreißlasche angeordnet ist.

Dem Dornrad 9 in Fig. 3 ist entsprechend dem Dornrad 9 der Fig. 2 eine Übergabestation 17 zugeordnet, in welcher die Packung nach der Bodenherstellung vom Dorn abgestreift und in eine Zelle der Kette 11 geschoben wird. An die Übergabestation schließen sich in Arbeitsrichtung A der Füllmaschine 6 wiederum eine Sterilisationsstation 18, eine Füllstation 19, eine Giebelstegnaht-Siegelungsstation 20, eine Giebel-Formstation (Ohrenansiegelungsstation) 21, ein Absetzer sowie eine Abtransportvorrichtung an.

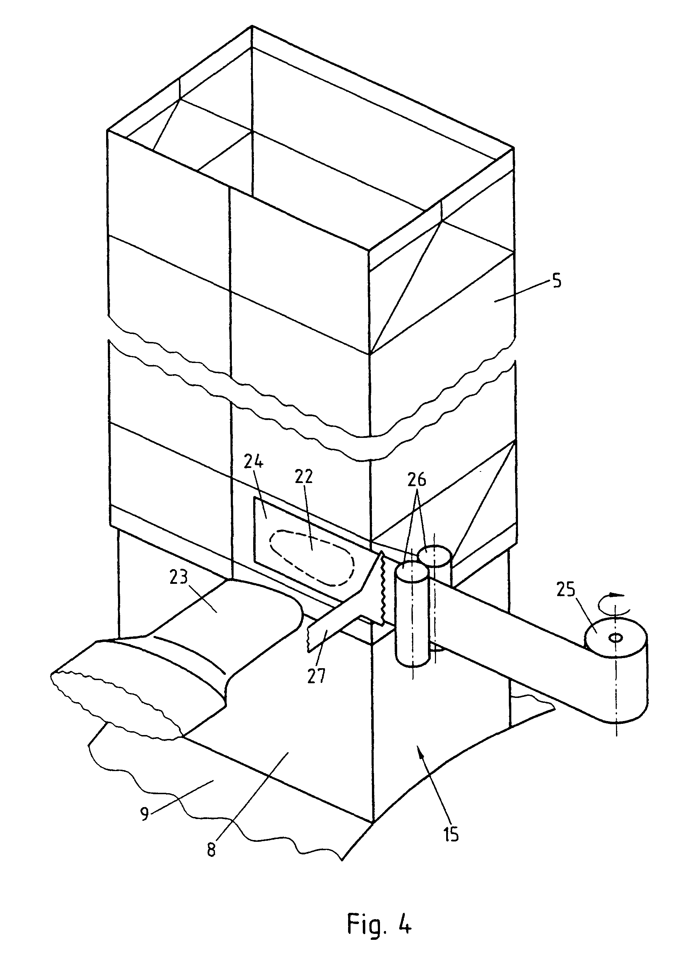

In Fig. 4 ist eine Vorrichtung 15 zum Anbringen einer Aufreißlasche auf der beschichteten Öffnung 22 des Packungsmantels 5 schematisch dargestellt. Der aufgeformte Packungsmantel ist auf einen Dorn 8 aufgeschoben, der als Amboß für eine Sonotrode 23 dient, mittels der eine Aufreißlasche 24, die vorzugsweise aus einem schweißbaren und reißfesten Aluminiumstreifen besteht, auf die beschichtete Öffnung 22 des Packungsmantels 5 auf-geschweißt wird. Die Aufreißlasche 24 wird hierzu von einer Vorratsrolle 25 abgezogen und der Applikationsstelle durch parallel zueinander angeordnete, die Außreißlasche reibschlüssig bewegende Vorzugsrollen 26 zugeführt. Sobald die anzubringende Aufreißlasche 24 richtig ausgerichtet und mit dem Packungsmantel 5 genügend fest verbunden ist, wird sie durch eine Schneidvorrichtung 27 von der Vorratsrolle 25 abgeschnitten. Es ist zu erkennen, daß in diesem Fall die Breitseite des Packungsmantels 5 mit der überbeschichteten Öffnung 22 in Drehrichtung des Dornrades 9 weist. Das Dornrad 9 wird dabei taktweise gedreht und die Sonotrode 23 während der Bewegungspausen des Dornrades 9 von außen her zwischen zwei Dorne eingefahren und nach der Verschweißung der siegelfähigen Aufreißlasche 24 an dem betreffenden Dorn wieder zurückgefahren.

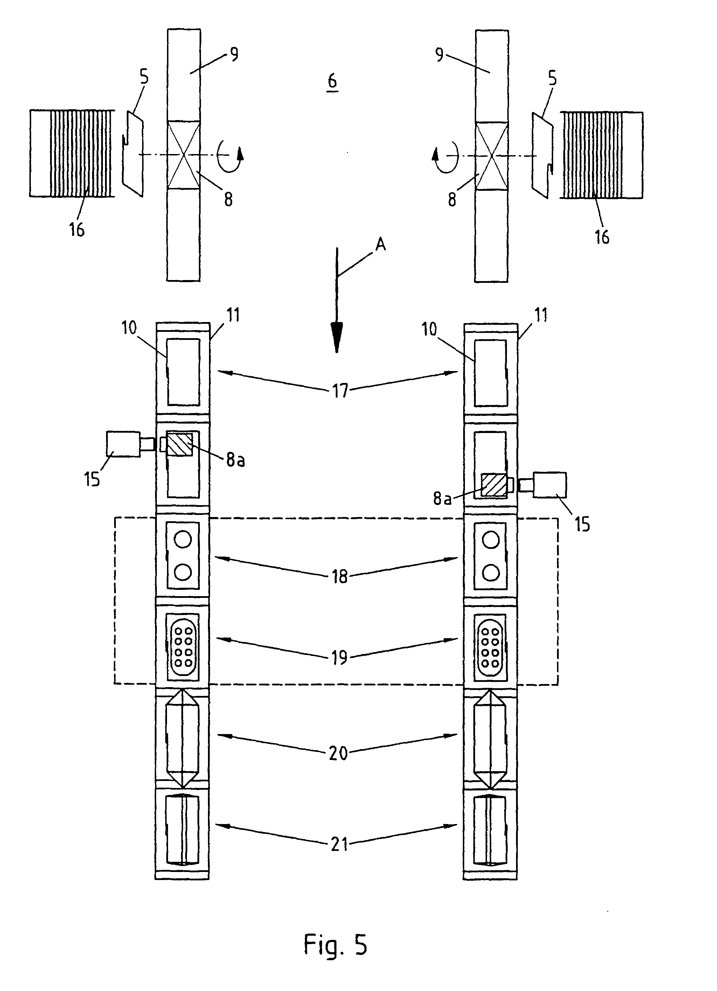

Fig. 5 zeigt eine weitere Ausführungsform der Erfindung. Im Gegensatz zu den in den Fig. 2 und 4 dargestellten Ausführungsformen erfolgt die Applikation der Aufreißlasche nicht am Dorn 8 eines Dornrades 9, sondern entlang der Zellenkette 11 zwischen der Übergabestation und der Aseptikstation 28 mittels einer Schweiß- oder Klebevorrichtung 15 und eines Ambosses 8a. Der Packungsmantel 5 wird der Füllmaschine wiederum im Stapel 16 quer zu deren Arbeitsrichtung A zugeführt, so daß die beschichtete Öffnung des Packungsmantels 5 in der Kette nach außen weist. Die Breitseiten des Packungsmantels 5 bzw. des Dorns 8 verlaufen somit parallel zur Arbeitsrichtung A der Füllmaschine. Das Dornrad 9 dient hier ausschließlich als Führung des Packungsmantels 5 während der Bodensiegelung. Die übrigen Stationen entlang der Kette 11 entsprechen denjenigen der Fig. 3.

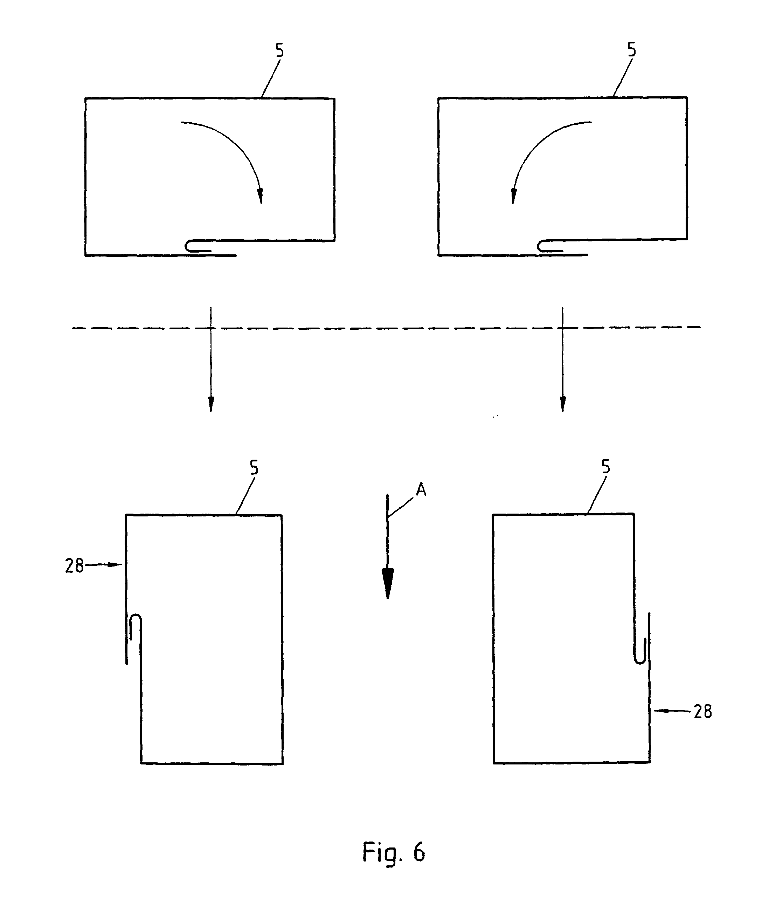

Werden die Packungsmäntel 5 wie bei den in den Figuren 2, 3 und 5 dargestellten Ausführungsbeispielen quer zur Arbeitsrichtung der Füllmaschine zugeführt, so baut die Maschine relativ breit, da die Magazine mit den Stapeln 16 dann quer zur Längsachse der Füllmaschine liegen. Eine schmal bauende Füllmaschine läßt sich realisieren, wenn der Packungsmantel 5 zwischen dem jeweiligen Magazin 7 und der Stelle, an welcher die Aufreißlasche angebracht wird, um etwa 90° gedreht wird. Dies ist in Fig. 6 für eine Füllmaschine mit zwei Produktionsbahnen schematisch dargestellt, wobei der Pfeil A die Arbeitsrichtung der Maschine anzeigt. Es ist zu erkennen, daß der bereits aufgeformte linke Packungsmantel innerhalb der Füllmaschine um 90° im Uhrzeigersinn gedreht wird, während der bereits aufgeformte rechte Packungsmantel um 90° gegen den Uhrzeigersinn gedreht wird. Die unterschiedlichen Drehrichtungen führen dabei zu einem Versatz der Applikationsstellen 28 für die Aufreißlaschen in den Produktionsbahnen. Beide Applikationsstellen 28 weisen jedoch nach außen und sind somit gut zugänglich.

## Patentansprüche

1. Verfahren zur Herstellung einer Verbundpackung mit einer durch eine Aufreißlasche (24) verschlossenen Öffnung (22), wobei die Öffnung (22) in einem Packungsmaterial (1) ausgestanzt wird, wobei zumindest im Bereich der Öffnung (22) das Packungsmaterial (1) beschichtet wird, wobei aus dem beschichteten Packungsmaterial ein Packungsmantel (5) erzeugt wird und wobei auf der Öffnung (22) des Packungsmantels (5) eine Aufreißlasche (24) angebracht wird,
**dadurch gekennzeichnet,**
**daß** der Packungsmantel (5) durch Aufschieben auf einen Dorn (8) eines Dornrades (9), das einer Füllmaschine (6) vorgeschaltet ist, zugeführt wird und daß das Anbringen der Aufreißlasche (24) am Dorn (8) des Dornrades (9) oder mittels eines Ambosses (8a) im Bereich einer Zellenkette (11) durchgeführt wird.

2. Verfahren nach Anspruch 1,
**dadurch gekennzeichnet, daß** der Packungsmantel (5) der Füllmaschine (6) derart zugeführt wird, dass dessen Öffnung (22) quer zur Arbeitsrichtung (A) der Füllmaschine (6) nach außen weist.

3. Verfahren nach Anspruch 1 oder 2,
**dadurch gekennzeichnet, daß** der Packungsmantel (5) zwischen einem Magazin (7) zur Aufnahme vorgefertigter Packungsmäntel (5) an der Füllmaschine (6) und der Stelle (28), an welcher die Aufreißlasche (24) angebracht wird, um etwa 90° um seine Längsachse gedreht wird.

4. Verfahren nach einem der Ansprüche 1 bis 3,
**dadurch gekennzeichnet, daß** das Anbringen der Aufreißlasche (24) zwischen den Dornen eines taktweise angetriebenen Dornrades (9) unter Verwendung mindestens einer Schweißeinrichtung (23) durchgeführt wird, die zwischen zwei Dorne eingefahren und nach der Verschweißung der Aufreißlasche (24) wieder zurückgefahren wird.

5. Verfahren nach einem der Ansprüche 1 bis 4,
**dadurch gekennzeichnet, daß** das Anbringen der Aufreißlasche (24) bzw. des Ausgießelementes vor einer Aseptikstation (28) der Füllmaschine (6) durchgeführt wird.

6. Verfahren nach einem der Ansprüche 1 bis 5,
**dadurch gekennzeichnet, daß** die Aufreißlasche (24) bzw. das Ausgießelement durch Verschweißung angebracht wird.

7. Verfahren nach Anspruch 6,
**dadurch gekennzeichnet, daß** die Aufreißlasche (24) bzw. das Ausgießelement durch Ultraschallschweißung oder Hochfrequenzschweißung angebracht wird.

8. Verfahren nach einem der Ansprüche 1 bis 5,
**dadurch gekennzeichnet, daß** die Aufreißlasche (24) bzw. das Ausgießelement durch Verklebung angebracht wird.

9. Verfahren nach einem der Ansprüche 1 bis 8,
**dadurch gekennzeichnet, daß** die Aufreißlasche (24) bzw. das Ausgießelement von einer eine Vielzahl von Aufreißlaschen aufweisenden Vorratsrolle (25) abgezogen wird.

10. Verfahren nach Anspruch 9,
**dadurch gekennzeichnet, daß** die Aufreißlasche (24) bzw. das Ausgießelement mittels Vorzugsrollen (26) zugeführt und durch eine Schneidvorrichtung (27) von der Vorratsrolle (25) abgetrennt wird.

11. Verfahren nach einem der Ansprüche 1 bis 10,
**dadurch gekennzeichnet, daß** die Aufreißlasche (24) aus einem reißfesten Aluminiumstreifen besteht.

12. Verfahren nach einem der Ansprüche 1 bis 11,
**dadurch gekennzeichnet, daß** die Füllmaschine (6) eine mehrbahnige Füllmaschine ist.

13. Verbundpackung mit einer durch eine Aufreißlasche (24) verschlossene Öffnung (22),
**dadurch gekennzeichnet, daß** die Packung nach dem Verfahren gemäß einem der Ansprüche 1 bis 12 hergestellt ist.

## Claims

1. A method for manufacturing a composite packaging with an opening (22) closed by a tear-off tab (24), wherein the opening (22) is punched out in a packaging material (1), wherein the packaging material (1) is coated at least in the area of the opening (22), wherein a packaging jacket (5) is produced from the coated packaging material and wherein a tear-off tab (24) is attached to the opening (22) of the packaging jacket (5),
**characterised in that** the packaging jacket (5) is inserted by sliding onto a mandrel (8) of a mandrel wheel (9), which is provided before a filling machine (6), and that the tear-off tab (24) is attached on the mandrel (8) of the mandrel wheel (9) or by means of an anvil (8a) in the area of a cellular chain (11).

2. The method according to claim 1,
**characterised in that** the packaging jacket (5) is fed to the filling machine (6) such that its opening (22) points outwards transverse to the working direction (A) of the filling machine (6).

3. The method according to claim 1 or claim 2,
**characterised in that** the packaging jacket (5) is turned through approximately 90° about its longitudinal axis between a magazine (7) to accommodate pre-finished packaging jackets (5) at the filling machine (6) and the position (28) at which the tear-off tab (24) is attached.

4. The method according to any one of claims 1 to 3,
**characterised in that** the tear-off tab (24) is attached between the mandrels of a fixed-cycle driven mandrel wheel (9) using at least one welding device (23), which is inserted between two mandrels and after welding the tear-off tab (24) is retracted again.

5. The method according to any one of claims 1 to 4,
**characterised in that** the tear-off tab (24) or the pouring element is attached before an aseptic station (28) of the filling machine (6).

6. The method according to any one of claims 1 to 5,
**characterised in that** the tear-off tab (24) or the pouring element is attached by welding.

7. The method according to claim 6,
**characterised in that** the tear-off tab (24) or the pouring element is attached by ultrasound welding or high-frequency welding.

8. The method according to any one of claims 1 to 5,
**characterised in that** the tear-off tab (24) or the pouring element is attached by gluing.

9. The method according to any one of claims 1 to 8,
**characterised in that** the tear-off tab (24) or the pouring element is withdrawn from a delivery spool (25) having a plurality of tear-off tabs.

10. The method according to claim 9,
**characterised in that** the tear-off tab (24) or the pouring element is fed by means of draw rollers (26) and separated by a cutting device (27) from the delivery spool (25).

11. The method according to any one of claims 1 to 10,
**characterised in that** the tear-off tab (24) is made of a tear-resistant aluminium strip.

12. The method according to any one of claims 1 to 11,
**characterised in that** the filling machine (6) is a multiple-line filling machine.

13. Composite packaging with an opening (22) closed by a tear-off tab (24),
**characterised in that** the packaging is manufactured by the method according to any one of claims 1 to 12.

## Revendications

1. Procédé de fabrication d'un emballage composite présentant une ouverture (22) fermée par l'intermédiaire d'une languette à ouverture facile (24), moyennant quoi l'ouverture (22) est formée à la presse dans un matériau d'emballage (1), moyennant quoi au moins dans la zone de l'ouverture (22), le matériau d'emballage (1) est revêtu, moyennant quoi, à partir du matériau d'emballage revêtu, on fabrique une enveloppe d'emballage (5) et moyennant quoi sur l'ouverture (22) de l'enveloppe d'emballage (5) est appliquée une languette à ouverture facile (24),
caractérisè en ce que
l'enveloppe d'emballage (5) est introduit en le poussant sur un poinçon (8) d'une roue à poinçons (9), qui est montée en amont d'une machine de remplissage (6), et en ce que l'application de la languette à ouverture facile (24) est effectuée sur le poinçon (8) de la roue à poinçons (9) ou à l'aide d'une enclume (8a) dans la zone d'une chaîne à godets (11).

2. Procédé selon la revendication 1, **caractérisé en ce que** l'enveloppe d'emballage (5) est délivrée à la machine de remplissage (6) de telle sorte que son ouverture (22) est orientée vers l'extérieur transversalement par rapport au sens de fonctionnement (A) de l'appareil de remplissage (6).

3. Procédé selon la revendication 1 ou 2, **caractérisé en ce que** l'enveloppe d'emballage (5) est tournée d'environ 90° autour de son axe longitudinal entre un magasin (7) permettant de loger les enveloppes d'emballage (5) préfabriquées sur la machine de remplissage (6) et l'endroit (28) auquel est appliquée la languette à ouverture facile (24).

4. Procédé selon l'une quelconque des revendications 1 à 3, **caractérisé en ce que** l'application de la languette à ouverture facile (24) est réalisée entre les poinçons d'une roue à poinçons (9) entraînée à une cadence en utilisant au moins un dispositif de soudage (23), qui est introduit entre deux poinçons et revient dans le sens inverse après le soudage de la languette à ouverture facile (24).

5. Procédé selon l'une quelconque des revendications 1 à 4, **caractérisé en ce que** l'application de la languette à ouverture facile (24) ou de l'élément bec-verseur est effectuée en amont d'un poste d'aseptisation (28) de la machine de remplissage (6).

6. Procédé selon l'une quelconque des revendications 1 à 5, **caractérisé en ce que** la languette à ouverture facile (24) ou l'élément de bec-verseur est appliqué(e) par soudage.

7. Procédé selon la revendication 6, **caractérisé en ce que** la languette à ouverture facile (24) ou l'élément bec-verseur est appliqué par un soudage à ultrasons ou à haute fréquence.

8. Procédé selon l'une quelconque des revendications 1 à 5, **caractérisé en ce que** la languette à ouverture facile (24) ou l'élément bec-verseur est appliqué(e) par collage.

9. Procédé selon l'une quelconque des revendications 1 à 8, **caractérisé en ce que** la languette à ouverture facile (24) ou l'élément bec verseur est extrait d'une pluralité d'un rouleau d'alimentation (25) présentant une pluralité de languettes à ouverture facile.

10. Procédé selon la revendication 9, **caractérisé en ce que** la languette à ouverture facile (24) ou l'élément bec-verseur est acheminé (e) à l'aide de rouleaux d'alimentation (26) et séparé(e) du rouleau d'alimentation (25) par l'intermédiaire d'un dispositif de découpe (27).

11. Procédé selon l'une quelconque des revendications 1 à 10, **caractérisé en ce que** la languette à ouverture facile (24) est constituée d'une bande d'aluminium résistant aux déchirements.

12. Procédé selon l'une quelconque des revendications 1 à 11, **caractérisé en ce que** la machine de remplissage (6) est une machine de remplissage à plusieurs voies.

13. Emballage composite avec une ouverture (22) fermée par une languette à ouverture facile (24), **caractérisé en ce que** l'emballage est fabriqué avec le procédé selon l'une quelconque des revendications précédentes.
